(19) Europäisches Patentamt
European Patent Office
Office européen des brevets

(11) **EP 4 604 519 A1**

(12) **EUROPEAN PATENT APPLICATION**
published in accordance with Art. 153(4) EPC

(43) Date of publication:
**20.08.2025   Bulletin 2025/34**

(21) Application number: **23877633.0**

(22) Date of filing: **10.10.2023**

(51) International Patent Classification (IPC):
**H04N 19/11** (2014.01)       **H04N 19/60** (2014.01)
**H04N 19/124** (2014.01)       **H04N 19/176** (2014.01)
**H04N 19/157** (2014.01)       **H04N 19/132** (2014.01)
**H04N 19/18** (2014.01)       **H04N 19/593** (2014.01)

(52) Cooperative Patent Classification (CPC):
**H04N 19/11; H04N 19/124; H04N 19/132;**
**H04N 19/157; H04N 19/176; H04N 19/18;**
**H04N 19/593; H04N 19/60**

(86) International application number:
**PCT/KR2023/015545**

(87) International publication number:
**WO 2024/080706 (18.04.2024 Gazette 2024/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:   **10.10.2022   US 202263414870 P**

(71) Applicant: **LG Electronics Inc.**
**Yeongdeungpo-gu**
**Seoul 07336 (KR)**

(72) Inventors:
• **YOO, Sunmi**
  **Seoul 06772 (KR)**
• **NAM, Junghak**
  **Seoul 06772 (KR)**
• **CHOI, Jangwon**
  **Seoul 06772 (KR)**
• **HONG, Myungoh**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND APPARATUS, AND RECORDING MEDIUM ON WHICH BITSTREAM IS STORED**

(57)    An image decoding/encoding method and apparatus according to the present disclosure can derive an intra prediction mode of the current block from among pre-defined intra prediction modes, and generate a prediction block of the current block on the basis of the intra prediction mode. Here, the pre-defined intra prediction modes can include a non-directional planar mode, a directional planar mode, a horizontal mode and a vertical mode, and the directional planar mode can include a horizontal planar mode and/or a vertical planar mode.

FIG.4

```
┌─────────────────────────────────┐
│  DERIVE INTRA PREDICTION MODE OF │ ── S400
│         CURRENT BLOCK            │
└─────────────────────────────────┘
                 │
┌─────────────────────────────────┐
│   GENERATE PREDICTION BLOCK      │ ── S410
│  BASED ON INTRA PREDICTION MODE  │
└─────────────────────────────────┘
                 │
┌─────────────────────────────────┐
│      OBTAIN RESIDUAL BLOCK       │ ── S420
│  BASED ON TRANSFORM COEFFICIENT  │
│       OF CURRENT BLOCK           │
└─────────────────────────────────┘
                 │
┌─────────────────────────────────┐
│     RECONSTRUCT CURRENT BLOCK    │ ── S430
│    BASED ON PREDICTION BLOCK     │
│       AND RESIDUAL BLOCK         │
└─────────────────────────────────┘
```

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide method and apparatus for intra prediction based on directional planar mode.

The present disclosure is to provide method and apparatus for signaling intra prediction mode information for directional planar mode.

The present disclosure is to provide method and apparatus for deriving reference sample for directional planar mode.

The present disclosure is to provide method and apparatus for applying PDPC to prediction block according to directional planar mode.

The present disclosure is to provide method and apparatus determining transform kernel of residual signal according to directional planar mode.

[Technical Solution]

An image decoding method and apparatus according to the present disclosure may derive an intra prediction mode of a current block from among pre-defined intra prediction modes, may generate a prediction block of the current block based on the intra prediction mode, may perform at least one of a dequantization or an inverse transform on transform coefficients of the current block to obtain a residual block of the current block, and may reconstruct the current block based on the prediction block and the residual block of the current block.

In an image decoding method and apparatus according to the present disclosure, the pre-defined intra prediction modes may include a non-directional planar mode, a directional planar mode, a horizontal mode, and a vertical mode, and the directional planar mode may include at least one of a horizontal planar mode or a vertical planar mode.

In an image decoding method and apparatus according to the present disclosure, when the intra prediction mode of the current block belongs to the directional planar mode, a transform kernel for the inverse transform may be determined based on a transform kernel for a pre-defined mode.

In an image decoding method and apparatus according to the present disclosure, when the intra prediction mode of the current block is the horizontal planar mode, the transform kernel for the inverse transform may be determined based on a transform kernel for a vertical mode, and when an intra prediction mode of the current block is a vertical planar mode, a transform kernel for an inverse transform may be determined based on the transform kernel for a horizontal mode.

In an image decoding method and apparatus according to the present disclosure, when the intra prediction mode of the current block is the horizontal planar mode, the transform kernel for the inverse transform may be determined based on a transform kernel for the horizontal mode, and when the intra prediction mode of the current block is the vertical planar mode, the transform kernel for the inverse transform may be determined based on the transform kernel for the vertical mode.

In an image decoding method and apparatus according to the present disclosure, when the intra prediction mode of the current block belongs to the directional planar mode, the transform kernel for the inverse transform may be determined based on a transform kernel for the non-directional planar mode.

In an image decoding method and apparatus according to the present disclosure, the intra prediction mode of the current block is derived based on intra prediction mode information, and the intra prediction mode information may include at least one of a planar flag indicating whether an intra prediction mode of the current block is the non-directional planar mode or belongs to the directional planar mode, or the planar direction flag indicating whether the intra prediction mode of the current block is the horizontal planar mode.

In an image decoding method and apparatus according to the present disclosure, an MPM flag indicating whether the intra prediction mode of the current block is derived from an MPM list may be signaled based on the planar flag indicating that the intra prediction mode of the current block does not belong to the directional planar mode.

In an image decoding method and apparatus according to the present disclosure, at least one of the planar flag or the planar direction flag may be adaptively signaled based on an availability flag indicating whether decoder-side intra mode derivation (DIMD) is available.

In an image decoding method and apparatus according to the present disclosure, at least one of the planar flag or the planar direction flag may be adaptively signaled based on an availability flag indicating whether template based intra mode derivation (TIMD) is available.

In an image decoding method and apparatus according to the present disclosure, when the intra prediction mode of the current block belongs to the directional planar mode, a reference sample for the current block may be derived based on a reference sample for the horizontal mode or the vertical mode.

In an image decoding method and apparatus according to the present disclosure, when the intra prediction mode of the current block belongs to the directional planar mode, a reference sample for the current block may be derived based on a reference sample for the non-directional planar mode.

An image encoding method and apparatus according to the present disclosure may generate a prediction block of a current block based on one of pre-defined intra prediction modes, may derive a residual block of the current block based on the prediction block of the current block, may derive a transform coefficient of the current block by performing at least one of a transform or a quantization on the residual block, and may encode the transform coefficient of the current block. Here, the pre-defined intra prediction modes may include a non-directional planar mode, a directional planar mode, a horizontal mode, and a vertical mode, and a directional planar mode may include at least one of a horizontal planar mode or a vertical planar mode.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and a device for transmitting video/image information generated according to an image encoding method according to the present disclosure are provided.

[Advantageous Effects]

According to the present disclosure, an existing planar mode may be extended to a directional planar mode, improving the intra prediction performance based on a planar with a high selection probability.

According to the present disclosure, an encoding efficiency of intra prediction mode information for indicating non-directional/directional planar mode may be improved.

According to the present disclosure, the prediction characteristics of a directional planar mode may be considered to derive a reference sample, improving the intra prediction performance.

According to the present disclosure, PDPC may be applied to remove the discontinuity between a prediction block and a neighboring area according to a directional planar mode, improving the encoding efficiency of a residual signal.

According to the present disclosure, by determining a transform or kernel based on the correlation of residuals between intra prediction modes, the performance of a transform is improved, and better energy compaction may be expected.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 shows an image decoding method performed by a decoding apparatus 300 as an embodiment according to the present disclosure.

FIG. 5 shows a schematic configuration of a decoding apparatus 300 that performs an image decoding method according to the present disclosure.

FIG. 6 shows an image encoding method performed by an encoding apparatus 200 as an embodiment according to the present disclosure.

FIG. 7 shows a schematic configuration of an encoding apparatus 200 that performs an image encoding method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

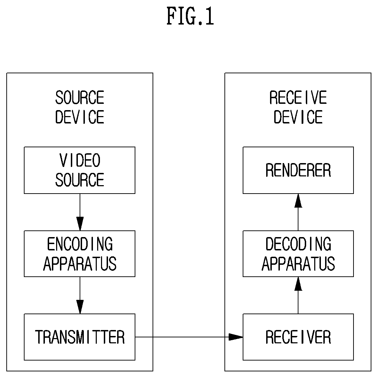

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

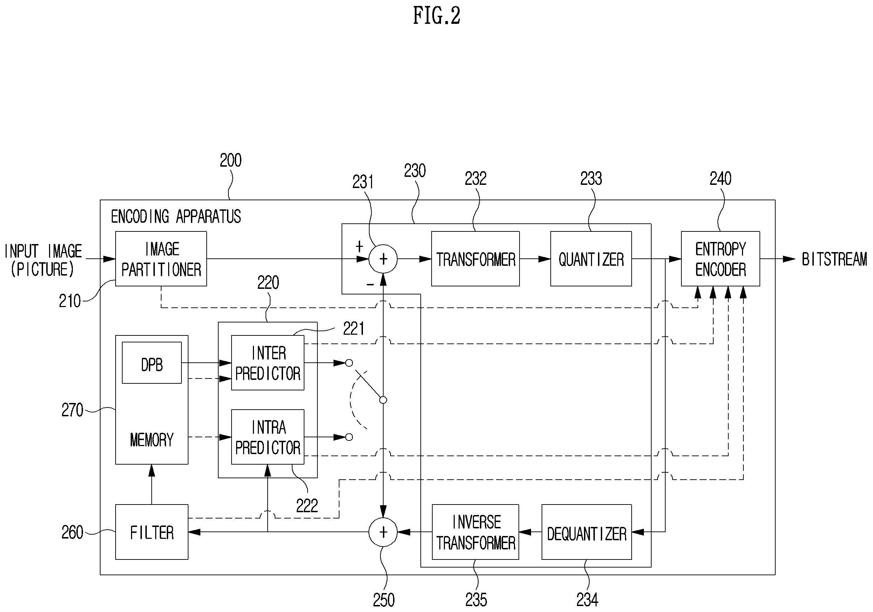

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

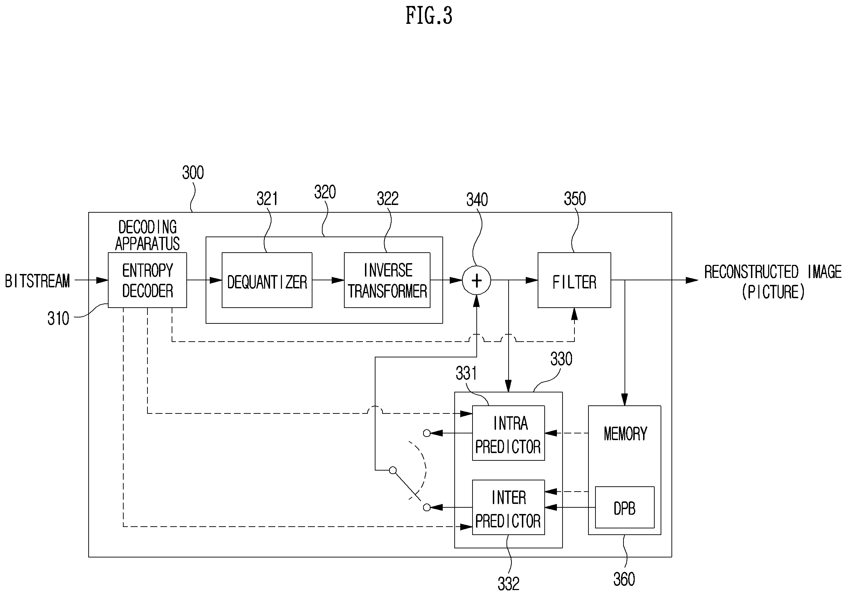

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

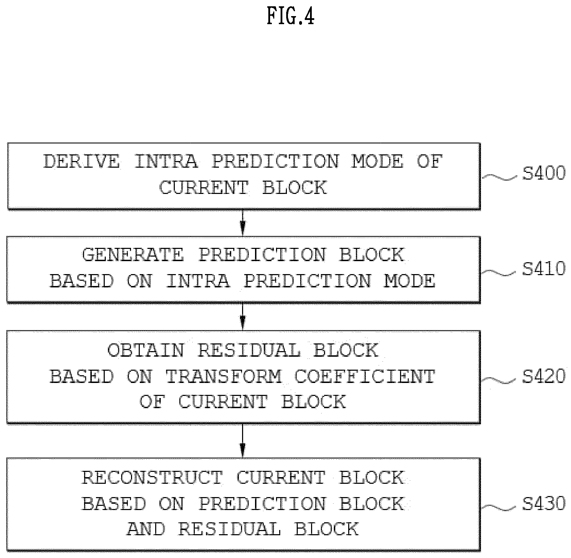

FIG. 4 shows an image decoding method performed by a decoding apparatus 300 as an embodiment according to the present disclosure.

Referring to FIG. 4, an intra prediction mode of the current block may be derived S400.

An intra prediction mode of the current block may be derived from one of the pre-defined intra prediction modes. The pre-defined intra prediction modes may include at least one of a non-directional mode or a directional mode. A non-directional mode may include at least one of a planar mode or a DC mode. A planar mode according to the present disclosure includes a non-directional planar mode and a directional planar mode, and the directional planar mode may include at least one of a horizontal planar mode or a vertical planar mode. Alternatively, a directional planar mode may be defined as a mode independent of a non-directional planar mode, in which case a planar mode according to the present disclosure may mean the non-directional planar mode. A directional mode may mean a mode having a predetermined angle, such as a horizontal mode, a vertical mode, a diagonal mode, etc.

An intra prediction mode of the current block may be derived based on information for specifying the intra prediction mode (hereinafter, referred to as intra prediction mode information). The intra prediction mode information according to the present disclosure may include at least one of an MPM flag, a planar flag, a planar direction flag, an MPM index, or residual mode information.

Intra prediction mode information may be defined differently depending on whether a planar mode is defined as a mode independent of the candidate mode of the MPM list. As an example, based on a planar mode not being defined as a mode independent of the candidate mode of the MPM list, an intra prediction mode information may include at least one of an MPM flag, an MPM index, or residual mode information. On the other hand, based on a planar mode being defined as a mode independent of the candidate mode of the MPM list (i.e., a planar mode is available as a candidate mode of the MPM list), an intra prediction mode may include at least one of an MPM flag, a planar flag, a planar direction flag, an MPM index, or residual mode information.

An MPM flag may indicate whether an intra prediction mode of the current block is derived from an MPM list including a plurality of candidate modes (most probable modes, MPMs). A planar flag may include at least one of a first planar flag indicating whether an intra prediction mode of the current block belongs to a planar mode or a second planar flag indicating whether an intra prediction mode of the current block is a non-directional planar mode. A second planar flag may be defined as a flag indicating whether an intra prediction mode of the current block belongs to a directional planar mode. A planar direction flag may indicate whether an intra prediction mode of the current block is a horizontal planar mode. An MPM index may specify any one of multiple candidate modes in the MPM list. The residual mode information may specify any one of the remaining modes excluding the planar mode and the candidate mode belonging to the MPM list among the pre-defined intra prediction modes.

Hereinafter, a method for signaling intra prediction mode information of the current block when a planar mode is an independent mode from a candidate mode of an MPM list will be described.

A horizontal/vertical planar mode may be signaled as one of the planar modes as shown in Table 1 below.

[Table 1]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag ) | |
|     **intra_subpartitions_mode_flag** | ae(v) |
|   if( intra_subpartitions_mode_flag = = 1 ) | |
|     **intra_subpartitions_split_flag** | ae(v) |
|   if( intra_luma_ref_idx = = 0 ) | |
|     **intra_luma_mpm_flag**[ x0 ][ y0 ] | ae(v) |
|   if( intra_luma_mpm_flag[ x0 ][ y0 ] ) { | |
|     if( intra_luma_ref_idx = = 0 ) | |
|       **intra_luma_not_planar_flag**[ x0 ][ y0 ] | ae(v) |
|     if( intra_luma_not_planar_flag[ x0 ][ y0 ] ) | |
|       **intra_luma_mpm_idx**[ x0 ][ y0 ] | ae(v) |
|   else { | |
|     if ( intra_subpartitions_mode_flag = = 0 ) | |
|       **planar_flag**[ x0 ][ y0 ] | ae(v) |
|     if ( planar_flag x0 ][ y0 ] = = 0 ) | |

(continued)

| | |
|---|---|
| **planar_dir_flag**[ x0 ][ y0 ] | ae(v) |
| } | |
| } else | |
| **intra_luma_mpm_remainder**[ x0 ][ y0 ] | ae(v) |
| ... | |
| } | |

Referring to Table 1, an MPM flag (intra_luma_mpm_flag) may be obtained from a bitstream. Based on an MPM flag indicating that an intra prediction mode of the current block is derived from an MPM list, a first planar flag (intra_luma_not_planar_flag) may be obtained from the bitstream. Based on a first planar flag indicating that an intra prediction mode of the current block does not belong to a planar mode, an MPM index may be obtained from the bitstream. An intra prediction mode of the current block may be derived as a candidate mode specified by the MPM index.

Based on a first planar flag indicating that an intra prediction mode of the current block belongs to a planar mode, a second planar flag (planar_flag) may be obtained from the bitstream. Based on a second planar flag indicating that an intra prediction mode of the current block is a non-directional planar mode, an intra prediction mode of the current block may be derived as a non-directional planar mode. Based on a second planar flag indicating that an intra prediction mode of the current block is not a non-directional planar mode, a planar direction flag (planar_dir_flag) may be obtained from the bitstream. Based on a planar direction flag indicating that an intra prediction mode of the current block is a horizontal planar mode, an intra prediction mode of the current block may be derived as a horizontal planar mode. On the other hand, based on a planar direction flag indicating that an intra prediction mode of the current block is a vertical planar mode, an intra prediction mode of the current block may be derived as a vertical planar mode. A second planar flag according to the present disclosure may be signaled when the ISP mode (intra subpartition mode) is not applied to the current block. The ISP mode may mean a mode in which the current block is divided into a plurality of subpartitions and intra prediction is performed on a subpartition basis.

Based on an MPM flag indicating that an intra prediction mode of the current block is not derived from an MPM list, residual mode information (intra_luma_mpm_remainder) may be obtained from the bitstream. An intra prediction mode of the current block may be derived as a mode specified by the residual mode information.

A second planar flag and a planar direction flag may be entropy decoded based on the CABAC method. Alternatively, since a planar direction flag has no uniformity in selecting a prediction direction, it may be bypass coded so as not to update the context with a probability of 0.5 each. A flag indicating availability of horizontal/vertical planar modes at a higher level, such as a video parameter set (VPS), a sequence parameter set (SPS), a picture parameter set (PPS), a picture header (PH), and a slice header (SH) may be signaled.

Alternatively, a horizontal/vertical planar mode may be signaled as an independent mode from a non-directional planar mode as shown in Table 2 below.

[Table 2]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 && ( cbWidth <= MaxTbSizeY && cbHeight <= MaxTbSizeY ) && ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| else{ | |
| **planar_horver_flag**[ x0 ][ y0 ] | ae(v) |
| if ( planar_horver_flag ) | |
| **planar_dir_flag**[ x0 ][ y0 ] | ae(v) |

(continued)

| | |
|---|---|
| } | |
| if ( planar_horver_flag = = 0 ){ | |
| if( intra_luma_ref_idx = = 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| ... | |
| } | |

Referring to Table 2, a second planar flag (planar_horver_flag) may be obtained from the bitstream. Here, a second planar flag may indicate whether an intra prediction mode of the current block belongs to a directional planar mode. As an example, based on the value of the second planar flag being 1, this may indicate that an intra prediction mode of the current block is a horizontal planar mode or a vertical planar mode. Based on the value of the second planar flag being 0, this may indicate that an intra prediction mode of the current block is neither a horizontal planar mode nor a vertical planar mode.

Based on a second planar flag indicating that an intra prediction mode of the current block belongs to the directional planar mode, a planar direction flag may be obtained from the bitstream. Based on a planar direction flag indicating that an intra prediction mode of the current block is a horizontal planar mode, an intra prediction mode of the current block may be derived as a horizontal planar mode. On the other hand, based on a planar direction flag indicating that an intra prediction mode of the current block is a vertical planar mode, an intra prediction mode of the current block may be derived as a vertical planar mode. A second planar flag according to the present disclosure may be signaled when the ISP mode (intra subpartition mode) is not applied to the current block.

Based on a second planar flag indicating that an intra prediction mode of the current block does not belong to a directional planar mode, at least one of the above-mentioned MPM flag, first planar flag, MPM index, or residual mode information may be acquired from the bitstream, and an intra prediction mode of the current block may be derived based on the same. It is the same as described by referring to Table 1, and an overlapping description will be omitted here.

A second planar flag and a planar direction flag may be entropy decoded based on the CABAC method. Alternatively, since the planar direction flag has no uniformity in selecting prediction direction, it may be bypass coded so as not to update the context with a probability of 0.5 each. A flag indicating availability of horizontal/vertical planar modes at a higher level, such as a video parameter set (VPS), a sequence parameter set (SPS), a picture parameter set (PPS), a picture header (PH), and a slice header (SH) may be signaled.

As described above, based on at least one of a second planar flag or a planar direction flag, an intra prediction mode of the current block may be derived as one of a non-directional planar mode, a horizontal planar mode, or a vertical planar mode.

A second planar flag and a planar direction flag according to the present disclosure may be signaled via the bitstream, which is the same as described in Tables 1 and 2

Alternatively, in Tables 1 and 2, an availability flag indicating the availability of DIMD (Decoder-side intra mode derivation) may be further considered as a signaling condition of a second planar flag. In this case, either the horizontal or vertical planar mode may be derived based on an intra prediction mode derived by DIMD (hereinafter, referred to as DIMD mode) without explicit signaling of a planar direction flag. In other words, based on a second planar flag indicating that an intra prediction mode of the current block is a non-directional planar mode, an intra prediction mode of the current block may be derived as a non-directional planar mode. On the other hand, based on a second planar flag indicating that an intra prediction mode of the current block is not a non-directional planar mode, an intra prediction mode of the current block may be derived as a horizontal or vertical planar mode based on DIMD mode.

Specifically, a second planar flag may be adaptively signaled based on an availability flag indicating whether the ISP mode is applied to the current block and whether DIMD is available. For example, a second planar flag may be signaled when the ISP mode is not applied to the current block and an availability flag indicates that DIMD is available, and the flag may not be signaled when this is not the case. Alternatively, a second planar flag may be signaled when the availability flag indicates that DIMD is available, and not signaled otherwise, regardless of whether the ISP mode is applied to the current block. The availability flag may be signaled in at least one of a VPS, a PPS, a PH, or a SH.

Hereinafter, a method for deriving the DIMD mode and a method for deriving an intra prediction mode of the current block will be described.

A gradient may be derived based on at least two samples belonging to a neighboring area of a current block. Here, the gradient may include at least one of a horizontal gradient or a vertical gradient. An intra prediction mode may be derived based on at least one of the derived gradient or an amplitude of the gradient. Here, the amplitude of the gradient may be determined based on a sum of the horizontal gradient and the vertical gradient. Through the present derivation method, one intra prediction mode may be derived, or two or more intra prediction modes may be derived.

As an example, a gradient may be calculated in units of a window having a predetermined size. An angle indicating a directionality of a sample within the window may be calculated based on the calculated gradient. The calculated angle may correspond to any one of the above-described pre-defined intra prediction modes. The amplitude of the gradient may be stored/updated for the intra prediction mode corresponding to the calculated angle. Through this process, for each window, an intra prediction mode corresponding to the calculated gradient may be determined, and the amplitude of the gradient may be stored/updated for the determined intra prediction mode. Among the stored amplitudes of gradient, the top T intra prediction modes having the largest amplitudes may be selected. Here, T may be an integer of 1, 2, 3, or more. The selected intra prediction mode may be set to a DIMD mode.

The neighboring area used to calculate the slope may include at least one of a left area, an upper area, an upper left area, a lower left area, or an upper right area adjacent to the current block, which are previously reconstructed areas of the current block. The neighboring area may include at least one of a neighboring sample line adjacent to the current block, a first non-neighboring sample line that is 1-sample away from the current block, or a second non-neighboring sample line that is 2-sample away from the current block. However, it is not limited thereto, and a non-neighboring sample line that is N-sample away from the current block may be further included, and N may be an integer greater than or equal to 3.

The neighboring region may be a region that is identically pre-defined in the encoding apparatus and the decoding apparatus to calculate the slope. Alternatively, the neighboring region may be variably determined based on information specifying the location of the neighboring region. In this case, the information specifying the location of the neighboring region may be signaled through a bitstream. Alternatively, the location of the neighboring region may be determined based on at least one of whether the current block is located at a boundary of a coding tree unit, a size of the current block (e.g., width, height, a ratio of width and height, a product of width and height), a partitioning type of the current block, a prediction mode of the neighboring region, or the availability of the neighboring region.

As an example, based on the current block being located at the upper boundary of the coding tree unit, at least one of the upper region, the upper left region, or the upper right region of the current block may not be referenced to calculate the gradient. When the width of the current block is greater than the height, either the upper region or the left region (e.g., the upper region) may be referenced to calculate the gradient, and the other (e.g., the left region) may not be referenced to calculate the gradient. Conversely, based on the width of the current block being less than the height, either the upper region or the left region (e.g., the left region) may be referenced to calculate the gradient, and the other (e.g., the upper region) may not be referenced to calculate the gradient. Based on the current block being generated through block partitioning in the horizontal direction, the upper region may not be referenced to calculate the gradient. Conversely, based on the current block being generated through block partitioning in the vertical direction, the left region may not be referenced to calculate the gradient. Based on the neighboring area of the current block being encoded in inter mode, the neighboring area may not be referenced to calculate the gradient. However, it is not limited thereto, and the neighboring area may be referenced to calculate the gradient regardless of the prediction mode of the neighboring area.

Based on the value of the DIMD mode (or the mode with the largest gradient) being smaller than the value of the upper left diagonal mode, it is determined that there is a high probability that the intra prediction mode is a horizontal prediction mode, and the intra prediction mode of the current block may be inferred as the horizontal planar mode. On the other hand, based on the value of the DIMD mode being greater than or equal to the value of the upper left diagonal mode, it is determined that there is a high probability that the intra prediction mode is a vertical prediction mode, and the intra prediction mode of the current block may be inferred as the vertical planar mode. As an example, when the pre-defined directional modes are defined from the lower left diagonal mode of mode number 2 to the upper right diagonal mode of mode number 66, the upper left diagonal mode may correspond to the mode number 34.

Based on the DIMD mode being a non-directional planar mode or a DC mode, the intra prediction mode of the current block may be inferred as a horizontal planar mode. In this case, since mode number 0 and 1 are assigned to the non-directional planar mode and the DC mode, respectively, the intra prediction mode may be inferred without additional conditions. Alternatively, based on the DIMD mode being a non-directional planar mode or a DC mode, the intra prediction mode of the current block may be inferred as a vertical planar mode. In general, since the edge of an image is likely to be in a vertical direction, improvement in prediction performance can be expected by using the vertical planar mode.

Table 3 below is an example of a signaling method for the second planar flag.

[Table 3]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 && ( cbWidth <= MaxTbSizeY && cbHeight <= MaxTbSizeY ) && ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| if( intra_luma_ref_idx = = 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| else { | |
| if ( intra _subpartitions_mode_flag = = 0 && sps_dimd_enabled_flag ) | |
| **planar_flag**[ x0 ][ y0 ] | ae(v) |
| } | |
| } else | |
| **intra_luma_mpm_remainder**[ x0 ][ y0 ] | ae(v) |
| ... | |
| } | |

Referring to Table 3, planar_flag indicates whether the intra prediction mode of the current block is a non-directional planar mode, which may correspond to the second planar flag according to the present disclosure. For example, based on planar_flag being 1, this may indicate that the intra prediction mode of the current block is a non-directional planar mode. Based on planar_flag being 0, this may indicate that the intra prediction mode of the current block is a horizontal or vertical planar mode. intra_subpartitions_mode_flag may indicate whether the ISP mode is applied to the current block, and sps_dimd_enabled_flag may indicate whether DIMD is available.

planar_flag may be acquired from the bitstream when the ISP mode is not applied to the current block (intra_subpartitions_mode_flag=0) and DIMD is available (sps_dimd_enabled_flag=1). Here, it is assumed that sps_dimd_enabled_flag is signaled in the sequence parameter set, but it is not limited thereto. Based on the value of planar_flag being 1, the intra prediction mode of the current block may be derived as the non-directional planar mode. On the other hand, based on the value of planar_flag being 0, the intra prediction mode of the current block may be derived as either the horizontal or vertical planar mode based on the DIMD mode as described above.

When the ISP mode is applied to the current block or DIMD is not available, planar_flag may be derived as 1 without being obtained from the bitstream. In other words, the intra prediction mode of the current block may be derived as the non-directional planar mode.

In Table 3, planar_flag is signaled dependently on intra_subpartitions_mode_flag and sps_dimd_enabled_flag, but it is just an example. In other words, planar_flag may be signaled dependently on sps_dimd_enabled_flag regardless of intra_subpartitions_mode_flag.

Alternatively, in Tables 1 and 2, an availability flag indicating availability of DIMD may be further considered as a signaling condition of the planar direction flag. The planar direction flag may not be signaled when the availability flag indicates that DIMD is available, and the planar direction flag may be signaled otherwise. Based on the planar direction flag being signaled, the intra prediction mode of the current block may be derived as either the horizontal or vertical planar mode, depending on the value of the planar direction flag. On the other hand, based on the planar direction flag not being signaled, the intra prediction mode of the current block may be derived as either the horizontal or vertical planar mode based on the DIMD mode as described above.

Table 4 below is an example of signaling method of the planar direction flag.

[Table 4]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| if( intra_luma_ref_idx = = 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra _luma_not_planar_flag[ x0 ][ y0 ] ) | |
| **intra_luma_mpm_idx**[ x0 ][ y0 ] | ae(v) |
| else { | |
| if( intra_subpartitions_mode_flag = = 0) | |
| **planar_flag**[ x0 ][ y0 ] | ae(v) |
| if ( !sps_dimd_enabled _flag && !planar_flag[ x0 ][ y0 ] ) | |
| **planar_dir_flag**[ x0 ][ y0 ] | ae(v) |
| } | |
| } else | |
| **intra_luma_mpm_remainder**[ x0 ][ y0 ] | ae(v) |
| ... | |
| } | |

Referring to Table 4, as seen in Table 3, planar_flag may indicate whether the intra prediction mode of the current block is a non-directional planar mode, intra_subpartitions_mode_flag may indicate whether the ISP mode is applied to the current block, and sps_dimd_enabled_flag may indicate whether DIMD is available. planar_dir_flag indicates whether the intra prediction mode of the current block is a horizontal planar mode, which may correspond to the planar direction flag according to the present disclosure.

planar_flag may be obtained from the bitstream when the ISP mode is not applied to the current block (intra_subpartitions_mode_flag=0). planar_flag may be obtained from the bitstream regardless of sps_dimd_enabled_flag.

Based on the value of planar_flag being 1, the intra prediction mode of the current block may be derived as the non-directional planar mode. On the other hand, based on the value of planar_flag being 0, planar_dir_flag may be adaptively signaled based on sps_dimd_enabled_flag. Based on the value of planar_flag being 0 and sps_dimd_enabled_flag being 0, planar_dir_flag may be obtained from the bitstream. When the value of planar_dir_flag is 1, the intra prediction mode of the current block may be derived as the horizontal planar mode, and when the value of planar_dir_flag is 0, the intra prediction mode of the current block may be derived as the vertical planar mode. Based on the value of planar_flag being 0 and sps_dimd_enabled_flag being 1, planar_dir_flag may not be obtained from the bitstream. In this case, based on the DIMD mode as described above, the intra prediction mode of the current block may be derived as either the horizontal or vertical planar mode.

In Table 4, planar_flag is signaled dependently on intra_subpartitions_mode_flag, but it is just an example. In other words, planar_flag may be signaled regardless of intra_subpartitions_mode_flag.

Alternatively, without signaling the above-described second planar flag and planar direction flag, based on the DIMD mode, the intra prediction mode of the current block may be derived as one of the non-directional planar mode, the horizontal planar mode, or the vertical planar mode.

When the DIMD mode falls within a predetermined first range determined based on the value (modeH) of the horizontal mode, which is a directional mode, the intra prediction mode of the current block may be inferred as the horizontal planar mode. Here, the predetermined range may mean a range from a value obtained by subtracting M from the value of the horizontal mode (modeH-M) to a value obtained by adding M to the value of the horizontal mode (modeH+M). For example, when the value of the horizontal mode is 18, M is 5, and the value of the DIMD mode is 16, the value of the DIMD mode falls within a range from 13 to 23, and therefore the intra prediction mode of the current block may be inferred as the horizontal planar mode.

Similarly, when the DIMD mode falls within a predetermined second range determined based on the vertical mode which is a directional mode, the intra prediction mode of the current block may be inferred as the vertical planar mode. Here, the predetermined range may mean a range from a value of the vertical mode minus M (modeV-M) to a value of the vertical mode plus M (modeV+M). For example, when the value of the vertical mode is 50, M is 5, and the value of the DIMD mode is 46, the value of the DIMD mode falls within a range from 45 to 55, and therefore the intra prediction mode of the current block may be inferred as the vertical planar mode.

When the value of the DIMD mode does not fall within any of the first and second ranges described above, the intra prediction mode of the current block may be inferred as the non-directional planar mode.

When the number of pre-defined directional modes is 65, M, for determining the above-described range, may be an integer greater than or equal to 0 and less than or equal to 16. Alternatively, based on the number of pre-defined directional modes being K, M may be an integer greater than or equal to 0 and less than or equal to K/4.

Alternatively, in Tables 1 and 2, an availability flag indicating whether TIMD (Template based intra mode derivation) is available may be further considered as a signaling condition of the second planar flag. In this case, either the horizontal or vertical planar mode may be derived based on the intra prediction mode derived by TIMD (hereinafter, referred to as the TIMD mode) without explicit signaling of the planar direction flag. In other words, based on the second planar flag indicating that the intra prediction mode of the current block is the non-directional planar mode, the intra prediction mode of the current block may be derived as the non-directional planar mode. On the other hand, based on the second planar flag indicating that the intra prediction mode of the current block is not the non-directional planar mode, the intra prediction mode of the current block may be derived as the horizontal or vertical planar mode based on the TIMD mode.

Specifically, the second planar flag may be adaptively signaled based on an availability flag indicating whether the ISP mode is applied to the current block and whether TIMD is available. For example, the second planar flag may be signaled when the ISP mode is not applied to the current block and the availability flag indicates that TIMD is available, and the second planar flag may not be signaled otherwise. Alternatively, the second planar flag may be signaled when the availability flag indicates that TIMD is available, and not signaled otherwise, regardless of whether the ISP mode is applied to the current block. The availability flag may be signaled in at least one of the VPS, the PPS, the PH, or the SH.

Hereinafter, a method for deriving TIMD mode, and a method for deriving an intra prediction mode of the current block based on that method is described.

A cost may be calculated for each of the horizontal planar mode and the vertical planar mode. Here, the cost may be calculated as the sum of absolute difference (SAD) between the predicted sample of the template region generated based on the horizontal/vertical planar mode and the pre-reconstructed sample of the template region. Alternatively, the cost may be calculated as the sum of absolute transformed difference (SATD) between the predicted sample of the template region and the reconstructed sample. Here, SATD may mean SAD transformed into the frequency domain. As an example of the transform, the Hadamard transform may be used, but it is not limited thereto. A mode having the minimum cost among the horizontal and vertical planar modes may be derived as the intra prediction mode of the current block as the TIMD mode.

Alternatively, the horizontal planar mode and the vertical planar mode may be reordered in ascending order of the calculated costs, and an encoded planar direction flag may be signaled based on the reordered order. For example, when the cost of the vertical planar mode among the two modes is greater than the cost of the horizontal planar mode, an index of 1 may be assigned to the vertical planar mode and an index of 0 may be assigned to the horizontal planar mode, respectively. When the current block is coded in the vertical planar mode, the second planar flag may be signaled as 0, and the planar direction flag may be signaled as 1. In addition, since the mode with the index of 0 is more likely to be selected as the two modes are reordered by the cost based on the template region, CABAC-based entropy coding may be applied to the planar direction flag.

Based on the value of the TIMD mode being less than the value of the upper left diagonal mode, it is determined that there is a high probability that the intra prediction mode is a horizontal prediction mode, and the intra prediction mode of the current block may be inferred as the horizontal planar mode. On the other hand, based on the value of the TIMD mode being greater than or equal to the value of the upper left diagonal mode, it is determined that there is a high probability that the intra prediction mode is a vertical prediction mode, and the intra prediction mode of the current block may be inferred as the vertical planar mode. As an example, when the pre-defined directional modes are defined from the lower left diagonal mode of mode number 2 to the upper right diagonal mode of mode number 66, the upper left diagonal mode may correspond to the mode number 34.

Based on the TIMD mode being a non-directional planar mode or a DC mode, the intra prediction mode of the current block may be inferred as a horizontal planar mode. In this case, since mode number 0 and 1 are assigned to the non-directional planar mode and the DC mode, respectively, the intra prediction mode may be inferred without additional conditions. Alternatively, based on the TIMD mode being a non-directional planar mode or a DC mode, the intra prediction mode of the current block may be inferred as a vertical planar mode. In general, since the edge of an image is likely to be in a vertical direction, improvement in prediction performance can be expected by using the vertical planar mode.

Table 5 below is an example of a signaling method for the second planar flag.

[Table 5]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 && ( cbWidth <= MaxTbSizeY && cbHeight <= MaxTbSizeY ) && ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag = = 1 ) | |
| **intra_subpartitions_split_flag** | ae(v) |
| if( intra_luma_ref_idx = = 0 ) | |
| **intra_luma_mpm_flag**[ x0 ][ y0 ] | ae(v) |
| if( intra_luma_mpm_flag[ x0 ][ y0 ] ) { | |
| if( intra_luma_ref_idx = = 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| else { | |
| if ( intra_subpartitions_mode_flag = = 0 && sps_timd_enabled_flag ) | |
| **planar_flag**[ x0 ][ y0 ] | ae(v) |
| } | |
| } else | |
| **intra_luma_mpm_remainder**[ x0 ][ y0 ] | ae(v) |
| ... | |
| } | |

Referring to Table 5, planar_flag indicates whether the intra prediction mode of the current block is a non-directional planar mode, which may correspond to the second planar flag according to the present disclosure. For example, based on planar_flag being 1, this may indicate that the intra prediction mode of the current block is a non-directional planar mode. Based on planar_flag being 0, this may indicate that the intra prediction mode of the current block is a horizontal or vertical planar mode. intra_subpartitions_mode_flag may indicate whether the ISP mode is applied to the current block, and sps_timd_enabled_flag may indicate whether TIMD is available.

planar_flag may be acquired from the bitstream when the ISP mode is not applied to the current block (intra_subpartitions_mode_flag=0) and TIMD is available (sps_timd_enabled_flag=1). Here, it is assumed that sps_timd_enabled_flag is signaled in the sequence parameter set, but it is not limited thereto. Based on the value of planar_flag being 1, the intra prediction mode of the current block may be derived as the non-directional planar mode. On the other hand, based on the value of planar_flag being 0, the intra prediction mode of the current block may be derived as either the horizontal or vertical planar mode based on the TIMD mode as described above.

Based on the ISP mode being applied to the current block or TIMD being not available, planar_flag may be derived as 1 without being obtained from the bitstream. In other words, the intra prediction mode of the current block may be derived as the non-directional planar mode.

In Table 5, planar_flag is signaled dependently on intra_subpartitions_mode_flag and sps_timd_enabled_flag, but it is just an example. In other words, planar_flag may be signaled dependently on sps_timd_enabled_flag regardless of intra_subpartitions_mode_flag.

Alternatively, in Tables 1 and 2, an availability flag indicating availability of TIMD may be further considered as a signaling condition of the planar direction flag. The planar direction flag may not be signaled when the availability flag indicates that TIMD is available, and the planar direction flag may be signaled otherwise. When the planar direction flag is signaled, the intra prediction mode of the current block may be derived as either the horizontal or vertical planar mode depending on the value of the planar direction flag. On the other hand, when the planar direction flag is not signaled, the intra prediction mode of the current block may be derived as either the horizontal or vertical planar mode based on the TIMD mode as described above.

Table 6 below is an example of how to signal the planar direction flag.

[Table 6]

| coding_unit( x0, y0, cbWidth, cbHeight, cqtDepth, treeType, modeType ) { | Descriptor |
|---|---|
| ... | |
| if( sps_isp_enabled_flag && intra_luma_ref_idx = = 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag ) | |
|     **intra_subpartitions_mode_flag** | ae(v) |
| if( intra_subpartitions_mode_flag = = 1 ) | |
|     **intra_subpartitions_split_flag** | ae(v) |
| if( intra_luma_ref_idx = = 0 ) | |
|     **intra_luma_mpm_flag**[ x0 ][ y0 ] | ae(v) |
| if( intra_luma_mpm_flag[ x0 ][ y0 ] ) { | |
|   if( intra_luma_ref_idx = = 0 ) | |
|     **intra_luma_not_planar_flag**[ x0 ][ y0 ] | ae(v) |
|   if( intra_luma_not_planar_flag[ x0 ][ y0 ] ) | |
|     **intra_luma_mpm_idx**[ x0 ][ y0 ] | ae(v) |
|   else { | |
|     if( intra_subpartitions_mode_flag = = 0) | |
|     **planar_flag**[ x0 ][ y0 ] | ae(v) |
|     if ( ! sps_timd_enabled_flag && !planar_flag[ x0 ][ y0 ] ) | |
|     **planar_dir_flag**[ x0 ][ y0 ] | ae(v) |
|   } | |
| } else | |
|   **intra_luma_mpm_remainder**[ x0 ][ y0 ] | ae(v) |

(continued)

| ... | |
|---|---|
| } | |

Referring to Table 6, as seen in Table 5, planar_flag indicates whether the intra prediction mode of the current block is a non-directional planar mode, intra_subpartitions_mode_flag indicates whether the ISP mode is applied to the current block, and sps_timd_enabled_flag may indicate whether DIMD is available. planar_dir_flag indicates whether the intra prediction mode of the current block is a horizontal planar mode, which may correspond to the planar direction flag according to the present disclosure.

planar_flag may be obtained from the bitstream based on the ISP mode not being applied to the current block (intra_subpartitions_mode_flag=0). planar_flag may be obtained from the bitstream regardless of sps_timd_enabled_flag.

When the value of planar_flag is 1, the intra prediction mode of the current block may be derived as the non-directional planar mode. On the other hand, when the value of planar_flag is 0, planar_dir_flag may be adaptively signaled based on sps_timd_enabled_flag. When the value of planar_flag is 0 and sps_timd_enabled_flag is 0, planar_dir_flag may be obtained from the bitstream. When the value of planar_dir_flag is 1, the intra prediction mode of the current block may be derived as the horizontal planar mode, and when the value of planar_dir_flag is 0, the intra prediction mode of the current block may be derived as the vertical planar mode. When the value of planar_flag is 0 and sps_timd_enabled_flag is 1, planar_dir_flag may not be obtained from the bitstream. In this case, based on the above-described TIMD mode, the intra prediction mode of the current block may be derived as either the horizontal or vertical planar mode.

In Table 6, planar_flag is signaled dependently on intra_subpartitions_mode_flag, but it is just an example. In other words, planar_flag may be signaled regardless of intra_subpartitions_mode_flag.

Alternatively, the horizontal/vertical planar mode may be used as a part of the TIMD candidate mode without signaling a separate second planar flag or planar direction flag. The TIMD candidate mode may include at least one of an intra prediction mode of a neighboring block, a candidate mode belonging to an MPM list, a vertical mode, a horizontal mode, or a DC mode. Additionally, at least one of the horizontal planar mode or the vertical planar mode may be included in the TIMD candidate mode. In other words, when the horizontal or vertical planar mode among the TIMD candidate modes of the current block has the lowest cost, that mode may be set as the intra prediction mode of the current block. However, the mode may be used when a flag indicating whether TIMD is applied to the current block (TIMD flag) is 1. In this way, when the horizontal/vertical planar mode is used as one of the TIMD candidate modes, coding efficiency can be improved because there is no additional flag signaling other than the TIMD flag.

Based on the horizontal/vertical planar mode being used as one of the TIMD candidate modes, the horizontal/vertical planar mode may be added as a TIMD candidate mode without a separate condition. Alternatively, when none of the intra prediction modes of the neighboring block are directional modes (i.e., the planar mode or the DC

mode), the horizontal/vertical planar mode may be added as a TIMD candidate mode. When all the intra prediction modes of the neighboring block are non-directional modes, it is unlikely that a texture or an object boundary, etc., is included in the current block. By adding horizontal/vertical planar mode to such a block as a candidate mode, the prediction performance can be improved. Alternatively, when even one of the intra prediction modes of the neighboring block is not a non-directional mode, the horizontal/vertical planar mode may be added as a TIMD candidate mode. Since the horizontal or vertical planar mode mainly performs prediction using the reference sample on the left or top, it has the characteristics of each mode, and at the same time, it has the characteristics of the planar mode that predicts by reflecting the distance of the reference sample, so that the prediction performance can be improved. Here, the neighboring block may include at least one of the left neighboring block, the upper neighboring block, the lower left neighboring block, the upper right neighboring block, or the upper left neighboring block.

Among the TIMD candidate modes, the top two modes (i.e., the mode with the lowest cost and the mode with the second lowest cost) may be selected in ascending order of cost. Based on the selected mode being a horizontal/vertical planar mode, that mode may be used as an intra prediction mode of the current block. In other words, a prediction block may be generated for each of the two modes, and the final prediction block may be generated by blending them. Alternatively, based on the mode with the lowest cost being a horizontal or vertical planar mode, the mode may be used alone without blending with the other prediction blocks described above. Alternatively, based on the mode with the lowest cost being a horizontal or vertical planar mode, whether to perform the blending described above may be determined by comparing it with the cost of the mode with the second lowest cost. For example, based on the second lowest cost being greater than 1.5 times the lowest cost, blending may not be performed, and the horizontal or vertical planar mode, which is the mode with the lowest cost, may be used alone. Alternatively, based on the mode with the second lowest cost being a horizontal or vertical planar mode, the mode with the lowest cost may be used alone without performing blending with the mode with the lowest cost and the second lowest cost. Alternatively, based on the mode with the second lowest cost being a horizontal or vertical planar mode, whether to perform the above-described blending may be determined by comparing with the cost of the mode with the second lowest cost. For example, based on the second lowest cost being less than 1.2 times the lowest cost, blending may not be performed. This method can improve the prediction performance by maintaining the characteristics of the horizontal/vertical planar mode as much as possible. For the intra slice, the above-described TIMD may be limited by the block size. For example, based on the current slice being an intra slice, TIMD may be performed only when the number of samples in the block is 1024 or less. As described above, when utilizing the horizontal/vertical planar mode based on TIMD, the block size limitation of TIMD may be followed only for the intra slice. Alternatively, when utilizing horizontal/vertical planar modes based on TIMD, the block size limitation of TIMD may not be followed for intra slices. By using horizontal/vertical planar modes based on TIMD mode for all block sizes, the performance of intra prediction can be improved.

The planar mode may not be defined as an independent mode from the candidate mode of the MPM list. In this case, the planar mode may be added as a candidate mode of the MPM list, and the method of constructing the MPM list will be described in detail below.

The MPM list may include multiple candidate modes. One or more modes may be derived based on at least one of the methods (1) to (6) below, and multiple candidate modes may be derived based on the same.

(1) Intra prediction mode of neighboring block adjacent to the current block
(2) Intra prediction mode derived from neighboring inter mode (IPM mode)
(3) DIMD mode
(4) TIMD mode
(5) Derived mode
(6) Default mode

The neighboring block may include at least one of a left neighboring block, an upper neighboring block, a lower left neighboring block, an upper right neighboring block, or an upper left neighboring block. Depending on the size of the current block, the order in which the intra prediction modes of the neighboring block are added to the MPM list may be different. As an example, when the height of the current block is greater than or equal to the width, the intra prediction mode of the upper neighboring block may be added before the intra prediction mode of the left neighboring block.

Based on the neighboring block being coded in the inter mode rather than the intra mode, the intra prediction mode may be derived from the IPM buffer. When the position pointed to by the motion vector of the neighboring block coded in the inter mode is the intra mode, the intra prediction mode of the corresponding position may be stored in the IPM buffer. The intra prediction mode stored in the IPM buffer may be used as a candidate mode of the current block.

The intra prediction mode derived based on the above-described DIMD may be used as a candidate mode. Based on the current block not being in the DIMD mode, the intra prediction mode derived based on DIMD may be used as a candidate mode.

The intra prediction mode derived based on the above-described TIMD may be used as a candidate mode. Based on the current block not being in the TIMD mode, the intra prediction mode derived based on TIMD may be used as a candidate mode.

The derived mode may mean a mode derived by adding or subtracting a predetermined constant value to a mode derived based on at least one of the methods (1) to (4) described above. Here, the constant value may be an integer of 1, 2, 3, 4 or more.

The default mode may be a mode defined identically for the encoding apparatus and the decoding apparatus, and may include at least one of a horizontal mode, a vertical mode, or a mode derived by adding or subtracting a predetermined constant value to the horizontal/vertical mode. Here, the constant value may be defined as a multiple of 4, such as 4, 8, or 12.

When the mode derived based on at least one of the methods (1) to (6) described above is a horizontal or vertical planar mode, that mode may be added to the MPM list. In this case, the diversity of intra prediction modes may be increased without additional signaling, and thus an improvement in prediction performance can be expected. Alternatively, when the mode derived based on at least one of the methods (1) to (6) described above is a horizontal or vertical planar mode, a non-directional planar mode may be added to the MPM list instead of the horizontal or vertical planar mode. In this case, since the insertion condition into the MPM list due to the increase in candidate modes does not increase, the complexity can be reduced. Alternatively, when the intra prediction mode derived from the neighboring inter mode is a horizontal or vertical planar mode, that mode may be added to the MPM list. In this case, the diversity of intra prediction modes may be increased, and thus an improvement in prediction performance can be expected. Alternatively, when the intra prediction mode derived from the neighboring inter mode is a horizontal or vertical planar mode, a non-directional planar mode may be added to the MPM list instead of the horizontal or vertical planar mode. In this way, an improvement in prediction performance can be expected by using the non-directional planar mode with the highest selection frequency.

The MPM list according to the present disclosure may be configured as a primary MPM list and a secondary MPM list, respectively. The candidate modes of the primary/secondary MPM lists are derived based on at least one of the methods (1) to (6) described above, but the secondary MPM list may be configured with a mode that is not identical to the candidate modes of the primary MPM list. The secondary MPM list may be configured with M candidate modes, where M may be an integer of 16 or more. When the secondary MPM list is not filled, a mode derived by adding or subtracting a value of N (N=1, 2, 3, 4) to a candidate mode having a candidate index of 0 in the primary MPM list may be inserted first. Additionally, a mode derived by adding or subtracting a value of N to a candidate mode having a candidate index of 1 in the primary MPM list may be inserted, and a mode derived by adding or subtracting a value of K (K=1, 2, 3) to a candidate mode having a candidate index of 2 in the primary MPM list may be inserted. However, when the secondary MPM list is not fully filled, mode that is not inserted in the primary/secondary MPM list may be inserted among the default modes.

Referring to FIG. 4, a prediction block of the current block may be generated based on the intra prediction mode of the current block S410.

A reference sample may be derived based on the intra prediction mode of the current block, and a prediction block of the current block may be generated based on the derived reference sample.

A filtered neighboring sample may be derived as a reference sample, or an unfiltered neighboring sample may be derived as a reference sample. As an example, when a reference sample is derived by performing filtering on a neighboring sample, the filtered neighboring sample may be derived as follows.

p [ -1 ][ -1 ] = ( refUnfilt[ -1 ][ 0 ] + 2 * refUnfilt[ -1 ][ -1 ] + refUnfilt[ 0 ][ -1 ] + 2 ) >> 2 p[ -1 ][ y ] = ( refUnfilt[ -1 ][ y + 1 ] + 2 * refUnfilt[ -1 ][ y ] + refUnfilt[ -1 ][ y - 1 ] + 2 ) >> 2 for y = 0..refH - 2

```
p[ -1 ][ refH - 1 ] = refUnfilt[ -1 ][ refH - 1 ]
```
p[ x ][ -1 ] = ( refUnfilt[ x - 1 ][ -1 ] + 2 * refUnfilt[ x ][ -1 ] + refUnfilt[ x + 1 ][ -1 ] + 2 ) >> 2 for x = 0..refW - 2

```
p[ refW - 1 ][ -1 ] = refUnfilt[ refW - 1 ][ -1 ]
```

In the formula above, refUnfilt represents an unfiltered neighboring sample, and [x][y] represents the x, y coordinates of the sample. This may represent the coordinates when the coordinate of the upper left sample in the current block is (0,0). refH and refW may represent the height and width of the reference region for intra prediction, respectively.

Filtering of neighboring samples may be performed when some or all of the following specific conditions are satisfied, and it may not be performed otherwise.

- nTbW * nTbH is greater than 32 (The product of the width and height of the current block is greater than 32)
- cIdx is equal to 0 (The component type of the current block is luma component)
- IntraSubPartitionsSplitType is equal to ISP_NO_SPLIT (ISP mode is not applied to the current block)
- one or more of the following conditions is true:

  - predModeIntra is equal to INTRA_PLANAR (The intra prediction mode of the current block is non-directional planar mode)
  - predModeIntra is equal to INTRA _ANGULAR34 (The intra prediction mode of the current block is upper-left diagonal mode)
  - predModeIntra is equal to INTRA_ANGULAR2 and nTbH is greater than or equal to nTbW (The intra prediction mode of the current block is the lower left diagonal mode, and the width of the current block is greater than or equal to the height.)
  - predModeIntra is equal to INTRA_ANGULAR66 and nTbW is greater than or equal to nTbH (The intra prediction mode of the current block is the upper right diagonal mode, and the width of the current block is greater than or equal to the height.)

In the horizontal planar mode, a prediction block may be generated based on a left neighboring sample row of the current block and an upper right neighboring sample row of the current block. As an example, a prediction block according to the horizontal planar mode may be generated as described in Equation 1 or Equation 2 below.

$predH(x,y) = ((W - 1 - x) * rec(-1, y) + (x + 1) * rec(W,-1)) \ll log_2 H$ $Planar_{Hor}(x,y) = ((predH \ll log_2 W + ((W * H) \gg 1)) \gg (log_2 W + log_2 H)$ [Equation 1]

$$Planar_{Hor}(x, y) = ((W - 1 - x) * rec(-1, y) + (x + 1) * rec(W, -1) + (W \gg 1)) \gg log_2 W \qquad \text{[Equation 2]}$$

In Equation 1, predH(x,y) may mean intermediate prediction sample of (x,y) coordinates. W and H may mean the width and height of the current block, respectively. rec(-1, y) may mean left neighboring sample of the current block, and rec(W,-1) may mean upper-right neighboring sample of the current block. $Planar_{Hor}$ (x, y) may mean a final prediction sample of the (x, y) coordinate. This may be equally applied to Equation 2.

In the vertical planar mode, a prediction block may be generated based on a row of samples around the upper of the current block and a row of samples around the lower left of the current block. As an example, a prediction block according to the vertical planar mode may be generated as described in Equation 3 or Equation 4 below.

$$predV(x, y) = ((H - 1 - y) * rec(x, -1) + (y + 1) * rec(-1, H)) \ll log_2 W \quad Planar_{Ver}(x, y) = ((predV \ll log_2 H) + ((W * H) \gg 1)) \gg (log_2 W + log_2 H) \qquad \text{[Equation 3]}$$

$$Planar_{Ver}(x, y) = ((H - 1 - y) * rec(x, -1) + (y + 1) * rec(-1, H) + (H \gg 1)) \gg log_2 H \qquad \text{[Equation 4]}$$

In Equation 3, predV(x, y) may mean intermediate prediction sample of the (x, y) coordinate. W and H may mean the width and height of the current block, respectively. rec(x, -1) may mean upper neighboring sample of the current block, and rec(-1, H) may mean lower left neighboring sample of the current block. $Planar_{Ver}$ (x, y) may mean a final prediction sample of the (x, y) coordinate. This may be equally applied to Equation 4.

When the intra prediction mode of the current block belongs to the directional planar mode, the reference sample for the current block may be derived based on the reference sample for the directional mode, which is the horizontal mode or the vertical mode.

As described in the equation above, in the case of the horizontal planar mode, similar to the horizontal mode, which is a directional mode, the left neighboring sample may be mainly used as a reference sample, and in the case of the vertical planar mode, similar to the vertical mode, which is a directional mode, the upper neighboring sample may be mainly used as a reference sample.

The horizontal or vertical planar mode according to the present disclosure may have characteristics similar to the horizontal mode or the vertical mode due to the characteristic of mainly using left or upper neighboring samples. Accordingly, a block encoded in horizontal planar mode may use the same reference sample derivation method used in a block encoded in horizontal mode. Similarly, a block encoded in vertical planar mode may use the same reference sample derivation method used in a block encoded in vertical mode.

Alternatively, when the intra prediction mode of the current block belongs to the directional planar mode, the reference sample for the current block may be derived based on the reference sample for the non-directional planar mode.

Since the horizontal/vertical planar mode performs prediction by applying a weight based on the distance between the reference sample and the prediction sample, it may have similar characteristics to the non-directional planar mode. Accordingly, a block encoded in the horizontal or vertical planar mode may use the same reference sample derivation method used in a block encoded in the non-directional planar mode.

Additionally, based on the intra prediction mode of the current block being a horizontal or vertical planar mode, position dependent intra prediction (PDPC) may be applied to the prediction block. This may be a filtering process to alleviate discontinuity between the prediction block and the reconstructed neighboring sample.

As an example, since the horizontal/vertical planar mode has similar characteristics to the non-directional planar mode, the PDPC method applied to the non-directional planar mode may be applied in the same/similar manner. Based on the PDPC method applied to the non-directional planar mode being applied, the prediction block or prediction sample generated based on the horizontal or vertical planar mode may be modified as described in Equation 5 below.

[Equation 5]

$$scale = \left((floorLog2(W) - 2 + floorLog2(H) - 2 + 2) \gg 2\right)$$

$$wT(y) = 32 \gg \min\left(31, \left((y \ll 1) \gg scale\right)\right)$$

$$wL(x) = 32 \gg \min\left(31, \left((x \ll 1) \gg scale\right)\right)$$

$$pred'(x,y) = pred(x,y)$$
$$+ \left((wL(x) * \left(rec(-1,y) - pred(x,y)\right) + wT(y)\right.$$
$$\left. * \left(rec(x,-1) - pred(x,y)\right) + 32\right) \gg 6)$$

In Equation 5, floorLog2(a) and min(a, b) may be defined as described in Equation 6 below.

[Equation 6]

$$floorLog2(a) = n, \qquad n \le log_2 a < n + 1$$

$$\min(a,b) = \begin{cases} a, & if\ a \le b \\ b, & otherwise \end{cases}$$

In Equation 5, W and H represent the width and height of the current block, respectively, and pred(x,y) may represent a prediction sample of (x,y) coordinates in the prediction block. Here, the (x, y) coordinate means the coordinate when the coordinate of the upper left sample of the current block is (0, 0). rec(-1, y) and rec(x, -1) represent the left neighboring sample and the upper neighboring sample, respectively. The left/upper neighboring sample may be the filtered neighboring sample described above or may be unfiltered neighboring sample. In Equation 6, n may be an integer less than or equal to $log_2 a$ and greater than ($log_2 a$-1).

Alternatively, in the case of the horizontal planar mode, since prediction is performed mainly using the left neighboring sample, the PDPC method for the horizontal mode with similar characteristics may be applied in the same/similar manner. Similarly, in the case of the vertical planar mode, since prediction is performed mainly using the upper neighboring sample, the PDPC method for the vertical mode with similar characteristics may be applied in the same/similar manner. When applying the PDPC method applied to the vertical mode, the prediction block or prediction sample generated based on the vertical planar mode may be modified as described in Equation 7 below.

[Equation 7]

$$nScale_{h,v} = (floorLog2(W) + floorLog2(H) - 2) \gg 2$$

$$refL(x,y) = rec(-1,y) - rec(-1,-1) + pred(x,y)$$

$$refT(x,y) = rec(x,-1) - rec(-1,-1) + pred(x,y)$$

$$wT(y) = 0$$

$$wL(x) = 32 \gg (x \ll 1) \gg nScale_{h,v}$$

$$pred(x,y) = Clip1(( refL(x,y) * wL(x) + refT(x,y) * wT(y) + (64 - wL(x) - wT(y)) * pred(x,y) + 32) \gg 6)$$

In Equation 7, Clip1(a) may be defined as described in Equation 8 below.

[Equation 8]

$$Clip1(a) = \begin{cases} a, & if\ 0 \le a \le (1 \ll BitDepth) - 1 \\ 0, & when\ a < 0 \\ (1 \ll BitDepth) - 1, & otherwise \end{cases}$$

In Equation 8, BitDepth represents the bit depth of the current sample, and rec(-1,-1) may represent the upper left neighboring sample.

Additionally, when applying the PDPC method applied to the horizontal mode, the prediction block or prediction sample generated based on the horizontal planar mode may be modified as described in Equation 9 below.

[0228]    [Equation 9]

$$nScale_{h,v} = (floorLog2(W) + floorLog2(H) - 2) \gg 2$$

$$refL(x,y) = rec(-1,y) - rec(-1,-1) + pred(x,y)$$

$$refT(x,y) = rec(x,-1) - rec(-1,-1) + pred(x,y)$$

$$wT(y) = 32 \gg ((y \ll 1) \gg nScale_{h,v})$$

$$wL(x) = 0$$

pred(x,y) = Clip1(( refL(x,y) * wL(x) + refT(x,y) * wT(y) + (64 - wL(x) - wT(y)) * pred(x,y) + 32) >> 6)

Clip1(a) in Equation 9 is as defined in Equation 8.

Referring to FIG. 4, residual block of the current block may be obtained by performing at least one of a dequantization or an inverse transform on the transform coefficient of the current block S420.

The transform coefficient of the current block may be derived by decoding the residual information signaled from the bitstream.

The transform kernel for the inverse transform may be determined based on at least one of the size or the intra prediction mode of the current block.

As described above, the horizontal planar mode may use left neighboring sample column and upper right neighboring sample, and the vertical planar mode may use upper neighboring sample row and lower left neighboring sample. In other words, the residual characteristic of a block encoded in the horizontal planar mode may be similar to the residual of a block encoded in the horizontal mode or the residual of a block encoded in the vertical mode. Similarly, the residual characteristic of a block encoded in the vertical planar mode may be similar to the residual of a block encoded in the vertical mode or the residual of a block encoded in the horizontal mode. Depending on the similarity of the residual characteristics, the transform kernel of a block encoded in the horizontal/vertical planar mode may be determined to be the same as that of a block encoded in the horizontal/vertical mode, which is a directional mode.

As an example, the residual signal of a block encoded in the horizontal planar mode may be regarded as the residual signal of a block encoded in the horizontal mode, and the transform kernel used in the block encoded in the horizontal mode may be used in the same manner. The residual signal of a block encoded in the vertical planar mode may be regarded as the residual signal of a block encoded in the vertical mode, and the transform kernel used in the block encoded in the vertical mode may be used in the same manner. Alternatively, the residual signal of a block encoded in the horizontal planar mode may be regarded as the residual signal of a block encoded in the vertical mode, and the transform kernel used in the block encoded in the vertical mode may be used in the same manner. The residual signal of a block encoded in the vertical planar mode may be regarded as the residual signal of a block encoded in the horizontal mode, and the transform kernel used in the block encoded in the horizontal mode may be used in the same manner. By determining the transform kernel based on the correlation of these residual characteristics, the performance of the transform is improved, therefore better energy compaction can be expected.

Alternatively, since the horizontal/vertical planar mode performs prediction by considering the distance between the reference sample and the prediction sample, it may have characteristics similar to the residual of the non-directional planar mode. Accordingly, the residual signal of a block encoded in the horizontal or vertical planar mode may be regarded as the residual signal of a block encoded in the non-directional planar mode, and the transform kernel used in the block encoded in the non-directional planar mode may be used in the same manner. By determining the transform kernel based on the correlation of these residual characteristics, the performance of the transform is improved, therefore better energy compaction can be expected.

Referring to FIG. 4, the current block may be reconstructed based on the prediction block and residual block of the current block S430.

A reconstructed block may be generated by adding the prediction block of the current block and the residual block. Here, the prediction block may be a prediction block to which PDPC is not applied, or a prediction block modified through PDPC.

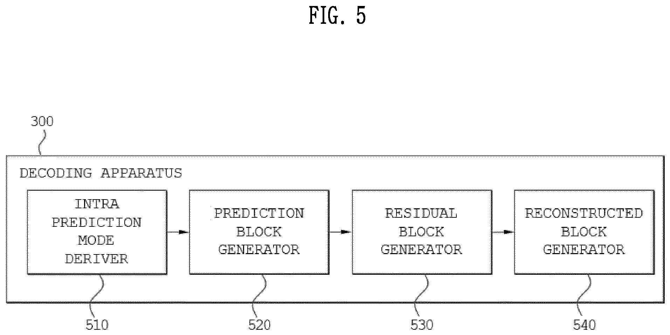

FIG. 5 shows a schematic configuration of a decoding apparatus 300 that performs an image decoding method according to the present disclosure.

Referring to FIG. 5, a decoding apparatus 300 according to the present disclosure may include an intra prediction mode deriver 510, a prediction block generator 520, a residual block generator 530, and a reconstructed block generator 540. The intra prediction mode deriver 510 and the prediction block generator 520 may be configured in the intra predictor 331 of FIG. 3, the residual block generator 530 may be configured in the residual processor 320 of FIG. 3, and the reconstructed block generator 540 may be configured in the adder 340 of FIG. 3.

The intra prediction mode deriver 510 may perform the same method of deriving the intra prediction mode of the current block according to step S400. In other words, the intra prediction mode deriver 510 may derive the intra prediction mode of the current block based on the intra prediction mode information, and a detailed description will be omitted here.

The prediction block generator 520 may perform the prediction block generation method according to step S410 in the same manner. In other words, the prediction block of the current block may be generated based on the intra prediction mode of the current block. In this case, the prediction block generator 520 may derive a reference sample for intra prediction based on neighboring sample of the current block, and it may also derive the reference sample by applying filtering to the neighboring sample under specific condition. In addition, the prediction block generator 520 may also generate a modified prediction block by applying PDPC to the prediction block.

The residual block generator 530 may perform the residual block generation method according to step S420 in the same manner. In other words, the residual block of the current block may be obtained by performing at least one of a dequantization or an inverse transform on the transform coefficient of the current block. In this case, as seen in FIG. 4, the transform kernel for inverse transform may be determined based on at least one of the size or the intra prediction mode of the current block.

The reconstructed block generator 540 may reconstruct the current block based on the prediction block and residual block of the current block.

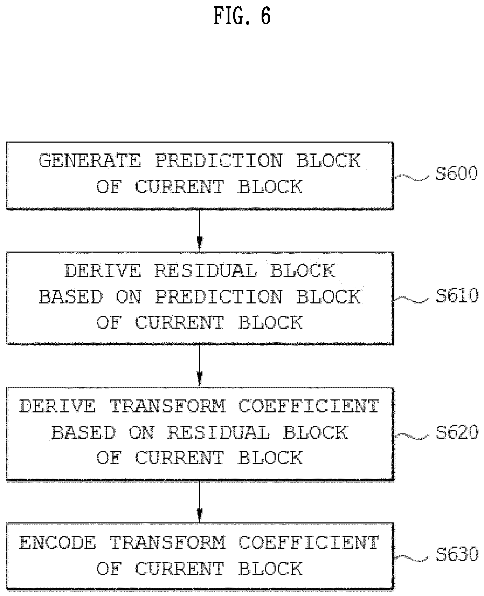

FIG. 6 shows an image encoding method performed by an encoding apparatus 200 as an embodiment according to the present disclosure.

Referring to FIG. 6, a prediction block of the current block may be generated S600.

A prediction block of a current block may be generated based on a predetermined intra prediction mode. The predetermined intra prediction mode may be one of pre-defined intra prediction modes. The pre-defined intra prediction modes may include at least one of a non-directional mode or a directional mode. The non-directional mode may include at least one of a planar mode or a DC mode. The planar mode according to the present disclosure may include a non-directional planar mode and a directional planar mode, and the directional planar mode may include at least one of a horizontal planar mode or a vertical planar mode. Alternatively, the directional planar mode may be defined as a mode independent of the non-directional planar mode, in which case the planar mode according to the present disclosure may mean the non-directional planar mode. The directional mode may mean a mode having a predetermined angle, such as a horizontal mode, a vertical mode, a diagonal mode, etc.

Based on the intra prediction mode used to generate the prediction block of the current block, intra prediction mode information may be encoded. The encoded intra prediction mode information may be inserted into a bitstream and signaled. The intra prediction mode information may include at least one of an MPM flag, a first planar flag, a second planar flag, a planar direction flag, an MPM index, or residual mode information.

The planar mode according to the present disclosure may be signaled as a mode independent of the candidate mode of the MPM list. A method of signaling or deriving intra prediction mode information for this purpose is the same as described by referring to FIG. 4.

Alternatively, the mode according to the present disclosure may not be signaled as a mode independent of the candidate mode of the MPM list. In other words, the planar mode may be added as a candidate mode of the MPM list, and it is the same as described by referring to FIG. 4.

The prediction block of the current block may be generated based on a predetermined reference sample. Here, the predetermined reference sample may be a pre-reconstructed neighboring sample adjacent to the current block or a filtered neighboring sample as described by referring to Fig. 4. The method for obtaining the filtered neighboring sample and whether filtering is performed are the same as described by referring to Fig. 4.

Additionally, PDPC may be applied to the prediction block of the current block. In particular, when the intra prediction mode of the current block is a horizontal or vertical planar mode, PDPC may be applied to the prediction block. In this case, as for the horizontal or vertical planar mode, considering similar characteristics to the non-directional planar mode, a PDPC method applied to the non-directional planar mode may be applied. Alternatively, as for the horizontal planar mode (or the vertical planar mode), considering similar characteristics to the horizontal mode (or the vertical mode), a PDPC method applied to the horizontal mode (or the vertical mode) may be applied.

Referring to FIG. 6, a residual block of a current block may be derived based on a prediction block of the current block S610. Here, the residual block of the current block may be derived by subtracting a prediction block from an original block of the current block.

Referring to FIG. 6, the transform coefficient of the current block may be derived by performing at least one of a transform or a quantization on the residual block of the current block S620.

The transform kernel for the transform may be determined based on at least one of the size or the intra prediction mode of the current block.

As an example, the residual signal of a block encoded in the horizontal planar mode may be regarded as the residual signal of a block encoded in the horizontal mode, and the transform kernel used in the block encoded in the horizontal mode may be used in the same manner. The residual signal of a block encoded in the vertical planar mode may be regarded as the residual signal of a block encoded in the vertical mode, and the transform kernel used in the block encoded in the vertical mode may be used in the same manner. Alternatively, the residual signal of a block encoded in the horizontal planar mode may be regarded as the residual signal of a block encoded in the vertical mode, and the transform kernel used in the block encoded in the vertical mode may be used in the same manner. The residual signal of a block encoded in the vertical planar mode may be regarded as the residual signal of a block encoded in the horizontal mode, and the transform kernel used in the block encoded in the horizontal mode may be used in the same manner. By determining the transform kernel based on the correlation of these residual characteristics, the performance of the transform may be improved, and better energy compaction can be expected.

Alternatively, since the horizontal/vertical planar mode performs prediction by considering the distance between the reference sample and the prediction sample, it may have characteristics similar to the residual of the non-directional planar mode. Accordingly, the residual signal of a block encoded in the horizontal or vertical planar mode may be regarded as the residual signal of a block encoded in the non-directional planar mode, and the transform kernel used in the block encoded in the non-directional planar mode may be used in the same manner. By determining the transform kernel based on the correlation of these residual characteristics, the performance of the transform may be improved, and better energy compaction can be expected.

Referring to FIG. 6, the transform coefficient of the current block may be encoded S630.

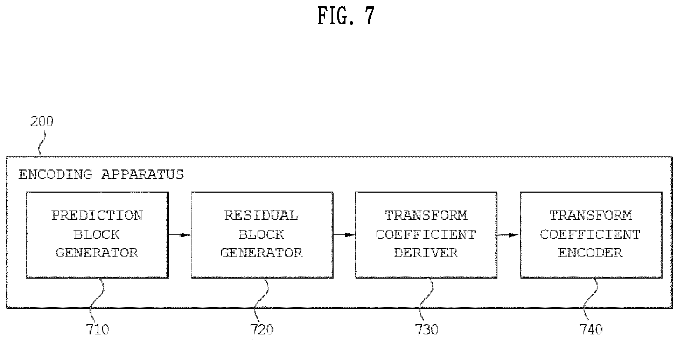

FIG. 7 shows a schematic configuration of an encoding apparatus 200 that performs an image encoding method according to the present disclosure.

Referring to FIG. 7, the encoding apparatus 200 according to the present disclosure may include a prediction block generator 710, a residual block generator 720, a transform coefficient deriver 730, and a transform coefficient encoder 740. The prediction block generator 710 may be configured in the inter predictor 221 of FIG. 2, and the residual block generator 720 and the transform coefficient deriver 730 may be configured in the residual processor 230 of FIG. 2. The transform coefficient encoder 740 may be configured in the entropy encoder 240 of FIG. 2.

The prediction block generator 710 may generate a prediction block of the current block based on a predetermined intra prediction mode, and may generate intra prediction mode information based on the intra prediction mode used to generate the prediction block of the current block. This is the same as described by referring to Fig. 6. The generated intra prediction mode information may be transmitted to the entropy encoder 240 of Fig. 2 and encoded.

The residual block generator 720 may generate a residual block through the difference between the original block of the current block and the prediction block.

The transform coefficient deriver 730 may derive the transform coefficient of the current block by performing at least one of a transform or a quantization on the residual block of the current block. The transform kernel for the transform may be determined based on at least one of the size or the intra prediction mode of the current block, as described by referring to Fig. 6.

The transform coefficient encoder 740 may encode the transform coefficient of the current block.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

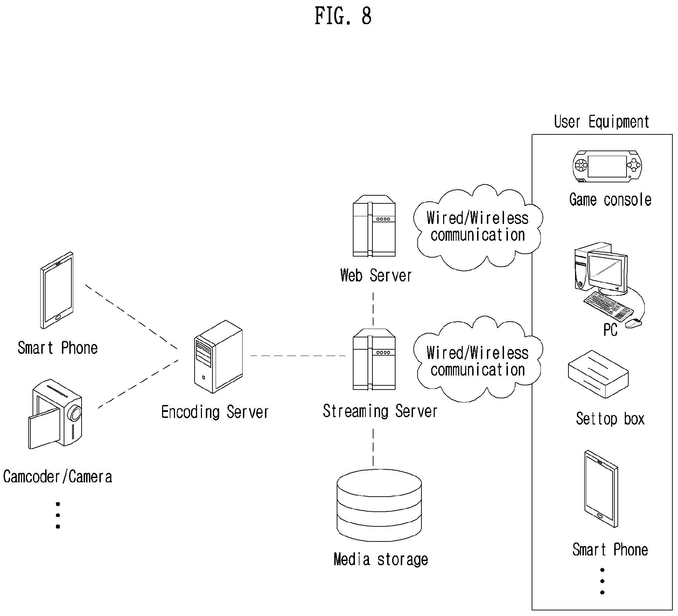

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

   deriving an intra prediction mode of a current block from among pre-defined intra prediction modes, wherein the pre-defined intra prediction modes include a non-directional planar mode, a directional planar mode, a horizontal mode, and a vertical mode, and the directional planar mode includes at least one of a horizontal planar mode or a vertical planar mode;
   generating a prediction block of the current block based on the intra prediction mode;
   obtaining a residual block of the current block by performing at least one of a dequantization or an inverse transform on transform coefficients of the current block; and
   reconstructing the current block based on the prediction block and the residual block of the current block.

2. The image decoding method of claim 1, wherein when the intra prediction mode of the current block belongs to the directional planar mode, a transform kernel for the inverse transform is determined based on a transform kernel for a pre-defined mode.

3. The image decoding method of claim 2, wherein when the intra prediction mode of the current block is the horizontal planar mode, the transform kernel for the inverse transform is determined based on a transform kernel for the vertical mode, and
   wherein when the intra prediction mode of the current block is the vertical planar mode, the transform kernel for the inverse transform is determined based on a transform kernel for the horizontal mode.

4. The image decoding method of claim 2, wherein when the intra prediction mode of the current block is the horizontal planar mode, the transform kernel for the inverse transform is determined based on a transform kernel for the horizontal mode, and
   wherein when the intra prediction mode of the current block is the vertical planar mode, the transform kernel for the inverse transform is determined based on a transform kernel for the vertical mode.

5. The image decoding method of claim 2, wherein when the intra prediction mode of the current block belongs to the directional planar mode, the transform kernel for the inverse transform is determined based on a transform kernel for the non-directional planar mode.

6. The image decoding method of claim 1, wherein the intra prediction mode of the current block is derived based on intra prediction mode information,
   wherein the intra prediction mode information includes at least one of a planar flag or a planar direction flag, and
   wherein the planar flag indicates whether the intra prediction mode of the current block is the non-directional planar mode or belongs to the directional planar mode, and the planar direction flag indicates whether the intra prediction mode of the current block is the horizontal planar mode.

7. The image decoding method of claim 6, wherein an MPM flag indicating whether the intra prediction mode of the current block is derived from an MPM list is signaled based on the planar flag indicating that the intra prediction mode of the current block does not belong to the directional planar mode.

8. The image decoding method of claim 6, wherein at least one of the planar flag or the planar direction flag is adaptively signaled based on an availability flag indicating whether decoder-side intra mode derivation (DIMD) is available.

9. The image decoding method of claim 6, wherein at least one of the planar flag or the planar direction flag is adaptively signaled based on an availability flag indicating whether template based intra mode derivation (TIMD) is available.

10. The image decoding method of claim 1, wherein when the intra prediction mode of the current block belongs to the directional planar mode, a reference sample for the current block is derived based on a reference sample for the horizontal mode or the vertical mode.

11. The image decoding method of claim 1, wherein when the intra prediction mode of the current block belongs to the directional planar mode, a reference sample for the current block is derived based on a reference sample for the non-directional planar mode.

12. An image encoding method, comprising:

generating a prediction block of a current block based on one of pre-defined intra prediction modes, wherein the pre-defined intra prediction modes include a non-directional planar mode, a directional planar mode, a horizontal mode, and a vertical mode, and the directional planar mode includes at least one of a horizontal planar mode or a vertical planar mode;
deriving a residual block of the current block based on the prediction block of the current block;
deriving a transform coefficient of the current block by performing at least one of a transform or a quantization on the residual block; and
encoding the transform coefficient of the current block.

13. A computer readable storage medium storing a bitstream generated by an image encoding method according to Claim 12.

14. A method for transmitting data, comprising:

obtaining a bitstream for image information, wherein the bitstream is generated by generating a prediction block of a current block based on one of pre-defined intra prediction modes, deriving a residual block of the current block based on the prediction block of the current block, deriving a transform coefficient of the current block by performing at least one of a transform or a quantization on the residual block, and encoding the transform coefficient of the current block; and
transmitting the data including the bitstream,
wherein the pre-defined intra prediction modes include a non-directional planar mode, a directional planar mode, a horizontal mode, and a vertical mode, and the directional planar mode includes at least one of a horizontal planar mode or a vertical planar mode.

FIG.1

FIG.2

ENCODING APPARATUS — 200

INPUT IMAGE (PICTURE)

IMAGE PARTITIONER — 210

BITSTREAM

ENTROPY ENCODER — 240

QUANTIZER — 233

TRANSFORMER — 232

230

231

DEQUANTIZER — 234

INVERSE TRANSFORMER — 235

250

220

INTER PREDICTOR — 221

INTRA PREDICTOR — 222

DPB

MEMORY — 270

FILTER — 260

FIG.3

FIG.4

```
┌─────────────────────────────────────┐
│   DERIVE INTRA PREDICTION MODE OF    │
│           CURRENT BLOCK              │──── S400
└─────────────────────────────────────┘
                   │
                   ▼
┌─────────────────────────────────────┐
│      GENERATE PREDICTION BLOCK       │
│    BASED ON INTRA PREDICTION MODE    │──── S410
└─────────────────────────────────────┘
                   │
                   ▼
┌─────────────────────────────────────┐
│        OBTAIN RESIDUAL BLOCK         │
│   BASED ON TRANSFORM COEFFICIENT     │──── S420
│           OF CURRENT BLOCK           │
└─────────────────────────────────────┘
                   │
                   ▼
┌─────────────────────────────────────┐
│      RECONSTRUCT CURRENT BLOCK       │
│      BASED ON PREDICTION BLOCK       │──── S430
│          AND RESIDUAL BLOCK          │
└─────────────────────────────────────┘
```

FIG. 5

300

DECODING APPARATUS

| INTRA PREDICTION MODE DERIVER | → | PREDICTION BLOCK GENERATOR | → | RESIDUAL BLOCK GENERATOR | → | RECONSTRUCTED BLOCK GENERATOR |

510     520     530     540

FIG. 6

```
┌─────────────────────────────┐
│   GENERATE PREDICTION BLOCK  │
│      OF CURRENT BLOCK        │─── S600
└─────────────────────────────┘
              │
              ▼
┌─────────────────────────────┐
│     DERIVE RESIDUAL BLOCK    │
│   BASED ON PREDICTION BLOCK  │─── S610
│      OF CURRENT BLOCK        │
└─────────────────────────────┘
              │
              ▼
┌─────────────────────────────┐
│  DERIVE TRANSFORM COEFFICIENT│
│    BASED ON RESIDUAL BLOCK   │─── S620
│      OF CURRENT BLOCK        │
└─────────────────────────────┘
              │
              ▼
┌─────────────────────────────┐
│  ENCODE TRANSFORM COEFFICIENT│
│      OF CURRENT BLOCK        │─── S630
└─────────────────────────────┘
```

FIG. 7

FIG. 8

## INTERNATIONAL SEARCH REPORT

| International application No. |
| --- |
| **PCT/KR2023/015545** |

**A. CLASSIFICATION OF SUBJECT MATTER**

**H04N 19/11**(2014.01)i; **H04N 19/60**(2014.01)i; **H04N 19/124**(2014.01)i; **H04N 19/176**(2014.01)i; **H04N 19/157**(2014.01)i; **H04N 19/132**(2014.01)i; **H04N 19/18**(2014.01)i; **H04N 19/593**(2014.01)i

According to International Patent Classification (IPC) or to both national classification and IPC

**B. FIELDS SEARCHED**

Minimum documentation searched (classification system followed by classification symbols)

H04N 19/11(2014.01); H04N 19/105(2014.01); H04N 19/119(2014.01); H04N 19/132(2014.01); H04N 19/59(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인트라 예측 모드(intra-prediction mode), 비방향성 플래너 모드(non-directional planar mode), 방향성 플래너 모드(directional planar mode), 변환 커널(transform kernel)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0116668 A (LG ELECTRONICS INC.) 27 September 2021 (2021-09-27) See paragraphs [0046] and [0051]; and claim 1. | 1,10-14 |
| A | | 2-9 |
| Y | KR 10-1854489 B1 (M&K HOLDINGS INC.) 03 May 2018 (2018-05-03) See paragraphs [0082] and [0089]. | 1,10-14 |
| A | KR 10-2020-0097825 A (LG ELECTRONICS INC.) 19 August 2020 (2020-08-19) See claims 1 and 6. | 1-14 |
| A | KR 10-1855293 B1 (SAMSUNG ELECTRONICS CO., LTD.) 20 June 2018 (2018-06-20) See claims 1-2. | 1-14 |
| A | KR 10-2021-0097803 A (SAMSUNG ELECTRONICS CO., LTD.) 09 August 2021 (2021-08-09) See paragraphs [0183]-[0189]. | 1-14 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **22 January 2024** | **22 January 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/015545**

| Patent document cited in search report | | | Publication date (day/month/year) | Patent family member(s) | | | Publication date (day/month/year) |
|---|---|---|---|---|---|---|---|
| KR | 10-2021-0116668 | A | 27 September 2021 | KR | 10-2023-0025036 | A | 21 February 2023 |
| | | | | US | 11431969 | B2 | 30 August 2022 |
| | | | | US | 2021-0400263 | A1 | 23 December 2021 |
| | | | | US | 2022-0368895 | A1 | 17 November 2022 |
| | | | | WO | 2020-171660 | A1 | 27 August 2020 |
| KR | 10-1854489 | B1 | 03 May 2018 | CN | 107105250 | A | 29 August 2017 |
| | | | | CN | 107105250 | B | 12 July 2019 |
| | | | | EP | 3125561 | A1 | 01 February 2017 |
| | | | | EP | 3125561 | B1 | 28 March 2018 |
| | | | | ES | 2602779 | T3 | 22 February 2017 |
| | | | | JP | 2016-213856 | A | 15 December 2016 |
| | | | | JP | 6371800 | B2 | 08 August 2018 |
| | | | | JP | 6371801 | B2 | 08 August 2018 |
| | | | | KR | 10-2018-0039756 | A | 18 April 2018 |
| | | | | KR | 10-2018-0039757 | A | 18 April 2018 |
| | | | | US | 2016-0301929 | A1 | 13 October 2016 |
| | | | | US | 2016-0309166 | A1 | 20 October 2016 |
| | | | | US | 9924186 | B2 | 20 March 2018 |
| | | | | US | 9924187 | B2 | 20 March 2018 |
| | | | | WO | 2012-023762 | A2 | 23 February 2012 |
| | | | | WO | 2012-023762 | A3 | 12 April 2012 |
| KR | 10-2020-0097825 | A | 19 August 2020 | CN | 111885381 | A | 03 November 2020 |
| | | | | CN | 111885381 | B | 13 October 2023 |
| | | | | EP | 3276958 | A1 | 31 January 2018 |
| | | | | KR | 10-2022-0074995 | A | 03 June 2022 |
| | | | | KR | 10-2023-0088846 | A | 20 June 2023 |
| | | | | US | 2023-232018 | A1 | 20 July 2023 |
| | | | | WO | 2016-153146 | A1 | 29 September 2016 |
| KR | 10-1855293 | B1 | 20 June 2018 | CN | 108282659 | A | 13 July 2018 |
| | | | | CN | 108282659 | B | 25 February 2022 |
| | | | | EP | 3247115 | A1 | 22 November 2017 |
| | | | | JP | 2015-181255 | A | 15 October 2015 |
| | | | | JP | 6101737 | B2 | 22 March 2017 |
| | | | | KR | 10-1600063 | B1 | 14 March 2016 |
| | | | | KR | 10-1654673 | B1 | 22 September 2016 |
| | | | | KR | 10-2018-0061099 | A | 07 June 2018 |
| | | | | KR | 10-2040317 | B1 | 27 November 2019 |
| | | | | US | 10506250 | B2 | 10 December 2019 |
| | | | | US | 2019-0028733 | A1 | 24 January 2019 |
| | | | | US | 9813727 | B2 | 07 November 2017 |
| | | | | WO | 2013-002586 | A2 | 03 January 2013 |
| | | | | WO | 2013-002586 | A3 | 14 March 2013 |
| KR | 10-2021-0097803 | A | 09 August 2021 | CN | 113574872 | A | 29 October 2021 |
| | | | | EP | 3913915 | A1 | 24 November 2021 |
| | | | | EP | 3913915 | A4 | 07 December 2022 |
| | | | | US | 2021-0344954 | A1 | 04 November 2021 |
| | | | | WO | 2020-149620 | A1 | 23 July 2020 |

Form PCT/ISA/210 (patent family annex) (July 2022)